(19) Europäisches Patentamt
European Patent Office
Office européen des brevets

(11) **EP 0 875 739 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
***G01F 23/296*** (2006.01)

(21) Anmeldenummer: **97107152.7**

(22) Anmeldetag: **30.04.1997**

(54) **Vorrichtung zur Feststellung und/oder Überwachung eines vorbestimmten Füllstands in einem Behälter**

Device for determining and/or monitoring of a predefined liquid level in a container

Dispositif pour la détermination et/ou la surveillance d'un niveau prédéterminé dans un réservoir

(84) Benannte Vertragsstaaten:
**DE FR GB IT**

(43) Veröffentlichungstag der Anmeldung:
**04.11.1998 Patentblatt 1998/45**

(73) Patentinhaber: **Endress + Hauser GmbH + Co. KG**
**79689 Maulburg (DE)**

(72) Erfinder:
- **Getman, Igor, Prof.**
  **79540 Lörrach (DE)**
- **Lopatin, Sergej, Dr.**
  **79539 Lörrach (DE)**

(56) Entgegenhaltungen:
**DE-A- 4 419 617**   **DE-A- 4 429 236**
**DE-C- 4 402 234**   **DE-C- 19 523 461**

EP 0 875 739 B1

## Beschreibung

Die Erfindung betrifft eine Vorrichtung zur Feststellung und/oder Überwachung eines vorbestimmten Füllstandes in einem Behälter.

Derartige Füllstandsgrenzschalter werden in vielen Industriezweigen, insb. in der Chemie und in der Lebensmittelindustrie eingesetzt. Sie dienen zur Grenzstanddetektion und werden z.B. als Überfüllsicherung oder als Pumpenleerlaufschutz verwendet.

In der DE-A 44 19 617 ist eine Vorrichtung zur Feststellung und/oder Überwachung eines vorbestimmten Füllstandes in einem Behälter beschrieben. Diese umfaßt:

- ein auf der Höhe des vorbestimmten Füllstandes angebrachtes mechanisches Schwingungsgebilde,
- einen elektromechanischen Wandler,

    - - der mindestens einen Sender aufweist,

        - - - an dem ein elektrisches Sendesignal anliegt und
        - - - der das mechanische Schwingungsgebilde zu Schwingungen anregt, und

    - - der einen Empfänger aufweist,

        - - - der die mechanischen Schwingungen des Schwingungsbildes aufnimmt und in ein elektrisches Empfangssignal umwandelt,

- eine Auswerteeinheit,

    - - die das Empfangssignal aufnimmt und dessen Frequenz bestimmt, dieses mit einer Referenzfrequenz vergleicht und ein Ausgangssignal erzeugt das angibt, daß das mechanische Schwingungsgebilde von einem Füllgut bedeckt ist, wenn die Frequenz einen Wert aufweist der kleiner als die Referenzfrequenz ist, und daß es nicht bedeckt ist, wenn der Wert größer ist, und

- einen Regelkreis, der eine zwischen dem elektrischen Sendesignal und dem elektrischen Empfangssignal bestehende Phasendifferenz auf einen bestimmten konstanten Wert regelt, bei dem das Schwingungsgebilde Schwingungen mit einer Resonanzfrequenz ausführt.

Der Regelkreis wird z. B. dadurch gebildet, daß das Empfangssignal verstärkt und über einen Phasenschieber auf das Sendesignal zurück gekoppelt wird.

In der DE-C 44 02 234 ist eine Vorrichtung zur Feststellung und/oder Überwachung eines vorbestimmten Füllstandes in einem Behälter beschrieben, welche einen Empfangs- und einen Erregungswandler aufweist, zwischen denen eine Verstärkerschaltung angeordnet ist. Während einer Testphase wird der Erregungswandler von der verstärkerschaltung getrennt, und es wird ein Signal vom Erregungswandler abgegriffen. Die Signale des Empfangs- und des Erregungswandler werden jeweils durch ein Differenzierglied in Impulsfolgen umgewandelt und zu einer kombinierten Impulsfolge vereinigt, aus welcher eine Auswerteschaltung Fehler in der Anordnung erkennt.

In der DE-C 195 23 461 ist eine Vorrichtung zur Feststellung und/oder Überwachung eines vorbestimmten Füllstandes in einem Behälter beschrieben, bei der ein auf der Höhe des vorbestimmten Füllstands angebrachtes mechanisches Schwingungsgebilde durch ein einziges piezoelektrisches Element zu Schwingungen angeregt wird. Dieses Element nimmt die Schwingungen des mechanischen Schwingungsgebildes auf und wandelt sie in ein elektrisches Empfangssignal um. Es dient also sowohl als Sender als auch als Empfänger und weist eine Sendeelektrode und eine Empfangselektrode auf.

Bei diesen Vorrichtungen handelt es sich um komplexe Schwingungssysteme, die sich jeweils aus einem mechanischen Schwingungsgebilde, einem elektromechanischen Wandler und dem Regelkreis zusammensetzen. Die einzelnen Komponenten sind nicht vollständig elektrisch und mechanisch voneinander getrennt. Es treten sowohl elektrische als auch mechanische Kopplungen auf.

Folglich umfaßt das Empfangssignal nicht nur das gewünschte Meßsignal, das auf die Schwingung des jeweiligen mechanischen Schwingungsgebildes zurückgeht, sondern auch zusätzliche Signale, die durch die vorgenannten Kopplungen entstehen.

Bisher war es nicht möglich derartige Vorrichtungen auch für Messungen in hochviskosen Medien oder in wasserhaltigen oder zähen Schäumen einzusetzen, da bei diesen Anwendungen eine zuverlässige Anregung des mechanischen Schwingungsgebildes zu Schwingungen bei der Resonanzfrequenz nicht gewährleistet ist.

Der feste Wert der Phasendifferenz entspricht der Resonanz des Systems wenn das Schwingungsgebilde in Gasen oder in Flüssigkeiten schwingt. Reduziert sich die Schwingungsgüte der Vorrichtung jedoch aus irgendeinem Grund, so hat dies zur Folge, daß der feste Wert der Phasendifferenz nicht mehr existiert. Es gibt keine Frequenz bei der das mechanische Schwingungsgebilde Schwingungen mit einer von null verschiedenen Amplitude ausführt und die Phasendifferenz den festen Wert aufweist. Diese Phasendifferenz kann durch den Regelkreis nicht eingestellt werden. Es tritt somit eine Fehlfunktion auf.

Eine Reduktion der Schwingungsgüte tritt z.B. dann auf, wenn die Bewegung des mechanischen Schwingungsgebildes gedämpft wird, z.B. indem es in ein viskoses Medium oder in flüssigkeitshaltigen oder zähen Schaum eingetaucht ist. Weiterhin wird die Schwingungsgüte reduziert durch Energieverluste innerhalb der Vorrichtung, z.B. bedingt durch Materialermüdungen oder durch Asymmetrien, z.B. aufgrund asymmetrischer Ansatzbildung, die zu asymmetrischen Rückstellkräften führen. Prinzipiell führt jede Art des Energieverlustes, sei es an ein Füllgut abgegebene Schwingungsenergie oder über eine Befestigung der Vorrichtung an den Behälter abgegebene Energie, zu einer Reduktion der Schwingungsgüte.

Es ist eine Aufgabe der Erfindung, eine Vorrichtung zur Feststellung und/oder Überwachung eines vorbestimmten Füllstands in einem Behälter anzugeben, bei der das Empfangssignal möglichst gleich dem gewünschten Meßsignal ist und keine zusätzlichen durch Kopplungen bedingte Signale enthält.

Eine weitere Aufgabe der Erfindung besteht darin, eine derartige Vorrichtung anzugeben, bei der zwischen dem Sendesignal und dem Empfangssignal bei der Resonanzfrequenz des mechanischen Schwingungsgebildes eine feste Phasendifferenz besteht, die unabhängig von der Schwingungsgüte der Vorrichtung ist.

Dies wird erfindungsgemäß gelöst, durch eine Vorrichtung zur Feststellung und/oder Überwachung eines vorbestimmten Füllstandes in einem Behälter, welche Vorrichtung umfaßt:

- ein auf der Höhe des vorbestimmten Füllstandes angebrachtes mechanisches Schwingungsgebilde,
- ein piezolelektrisches Element,

   - das das Schwingungsgebilde zu Schwingungen anregt und dessen Schwingungen aufnimmt,
   -- das mindestens drei Bereiche aufweist,

      -- einen ersten eine Sendeelektrode aufweisenden Bereich, einen zweiten eine erste Empfangselektrode aufweisenden Bereich und einen dritten eine zweite Empfangselektrode aufweisenden Bereich,

- wobei die beiden Empfangselektroden formgleich sind und symmetrisch zueinander und zu der Sendeelektrode angeordnet sind und
- wobei das piezoelektrische Element im ersten und im zweiten Bereich eine Polarisation aufweist, die einer Polarisation des dritten Bereichs entgegengerichtet ist, und
- die ein Empfangssignal erzeugt, das gleich der Differenz eines an der ersten Empfangselektrode anstehenden ersten Signals und eines an der zweiten Empfangselektrode anstehenden zweiten Signals ist, und
- eine Auswerteeinheit,

   - - die die Frequenz des Empfangssignals (E) bestimmt und mit einer Referenzfrequenz ($f_n$) vergleicht.

Gemäß einer Weiterbildung der Erfindung weist die Vorrichtung eine Schaltung auf, die die Frequenz des Empfangssignal bestimmt, diese mit einer Referenzfrequenz vergleicht und ein Ausgangssignal erzeugt das angibt, daß das mechanische Schwingungsgebilde von einem Füllgut bedeckt ist, wenn die Frequenz einen Wert aufweist der kleiner als die Referenzfrequenz ist, und daß es nicht bedeckt ist, wenn der Wert größer ist.

Gemäß einer weiteren Weiterbildung liegt das Sendesignal über eine Sendesignalleitung an der Sendeelektrode an und es ist ein Regelkreis vorgesehen, der eine zwischen dem Sendesignal und dem Empfangssignal bestehende Phasendifferenz auf einen bestimmten konstanten Wert regelt, bei dem das Schwingungsgebilde Schwingungen mit einer Resonanzfrequenz ausführt.

Gemäß einer Ausgestaltung ist auf dem piezoelektrischen Element eine mit einem Bezugspotential verbundene Referenzelektrode angeordnet.

Gemäß einer weiteren Ausgestaltung ist das piezoelektrische Element scheibenförmig und die Sendelektrode und die beiden Empfangselektroden sind auf einer Kreisfläche desselben angeordnet.

Gemäß einer weiteren Ausgestaltung sind die beiden Empfangselektroden Kreissegmente die auf einander diametral gegenüberliegenden Kreissegmenten der Kreisfläche angeordnet sind.

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.

Fig. 1       zeigt einen Längsschnitt durch ein mechanisches Schwingungsgebilde mit einem piezoelektrischen Element;

Fig. 2       zeigt eine schematische Darstellung des piezoelektrischen Elements von Fig. 1 und eine daran angeschlossene Schaltung;

Fig. 3       zeigt eine erfindungsgemäße Anordnung der Sende- und Empfangselektroden;

Fig. 4a      zeigt die Amplitude des Meßsignals $E_{M1}$ in Abhängigkeit von der Frequenz bei hoher und bei niedriger Schwingungsgüte;

Fig. 4b      zeigt die Phase des Meßsignals $E_{M1}$ in Abhängigkeit von der Frequenz bei hoher und bei niedriger Schwingungsgüte;

Fig. 5a      zeigt die Amplitude eines zusätzlichen Signals $E_{el1}$ in Abhängigkeit von der Frequenz;

Fig. 5b      zeigt die Phase des ersten zusätzlichen Signals $E_{el1}$ in Abhängigkeit von der Frequenz;

Fig. 6a      zeigt die Amplitude des Empfangssignals $E_1$ in Abhängigkeit von der Frequenz bei hoher und bei niedriger Schwingungsgüte;

Fig. 6b      zeigt die Phase des Empfangssignals $E_1$ in Abhängigkeit von der Frequenz bei hoher und bei niedriger Schwingungsgüte;

Fig. 7a      zeigt die Amplitude des Meßsignals $E_{M2}$ in Abhängigkeit von der Frequenz bei hoher und bei niedriger Schwingungsgüte;

Fig. 7b      zeigt die Phase des Meßsignals $E_{M2}$ in Abhängigkeit von der Frequenz bei hoher und bei niedriger Schwingungsgüte;

Fig. 8a      zeigt die Amplitude eines zusätzlichen Signals $E_{e12}$ in Abhängigkeit von der Frequenz;

Fig. 8b      zeigt die Phase des zusätzlichen Signals $E_{e12}$ in Abhängigkeit von der Frequenz;

Fig. 9a      zeigt die Amplitude des Signals $E_2$ in Abhängigkeit von der Frequenz bei hoher und bei niedriger Schwingungsgüte;

Fig. 9b      zeigt die Phase des Signals $E_2$ in Abhängigkeit von der Frequenz bei hoher und bei niedriger Schwingungsgüte;

Fig. 10      zeigt die Amplituden $A_1$ und $A_2$ der Signale $E_1$ und $E_2$ der der beiden Empfangselektroden von Fig. 1;

Fig. 11a     zeigt die Amplitude des Empfangssignals E in Abhängigkeit von der Frequenz;

Fig. 11b     zeigt die Phase des Empfangssignals E in Abhängigkeit von der Frequenz;

Fig. 12      zeigt die Amplituden $A_1$ und $A_2$ der Signale $E_1$ und $E_2$ der der beiden Empfangselektroden von Fig. 1 von einer Vorrichtung mit reduzierter Schwingungsgüte;

Fig. 13a     zeigt die Amplitude des Empfangssignals E in Abhängigkeit von der Frequenz von einer Vorrichtung mit reduzierter Schwingungsgüte; und

Fig. 13b     zeigt die Phase des Empfangssignals E in Abhängigkeit von der Frequenz von einer Vorrichtung mit reduzierter Schwingungsgüte.

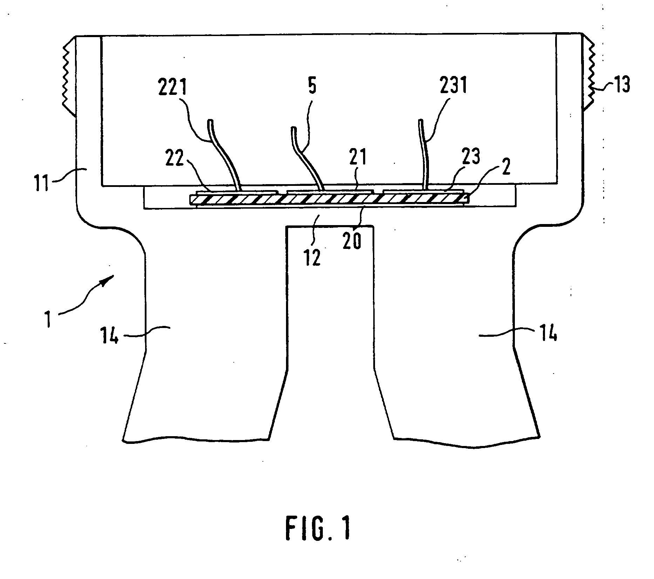

Fig. 1 zeigt einen Längsschnitt durch ein Ausführungsbeispiel eines mechanischen Schwingungsgebildes 1. Es weist ein im wesentlichen zylindrisches Gehäuse 11 auf, das von einer kreisförmigen Membran 12 frontbündig abgeschlossen ist. An das Gehäuse 11 ist ein Gewinde 13 angeformt, mittels dessen die Vorrichtung in eine nicht dargestellte auf der Höhe des vorbestimmten Füllstands angeordnete Öffnung in einem Behälter einschraubbar ist.

Andere dem Fachmann bekannte Befestigungsweisen, z.B. mittels an dem Gehäuse 11 angeformter Flansche, sind ebenfalls einsetzbar.

An der Außenseite des Gehäuses 11 sind an der Membran 12 zwei in den Behälter weisende Schwingstäbe 14 angeformt. Diese werden durch einen im Inneren des Gehäuses 11 auf der Membran 12 angeordnetes scheibenförmiges piezoelektrisches Element 2 in Schwingungen senkrecht zu deren Längsachse versetzt.

Die Erfindung ist jedoch nicht auf mechanische Schwingungssysteme mit zwei Schwingstäben beschränkt; sie kann auch bei Grenzschaltern eingesetzt werden, die nur einen oder keine Schwingstäbe aufweisen. Bei den letztgenannten kommt z.B. nur die schwingende Membran mit einem in dem Behälter befindlichen Füllgut in Kontakt.

Auch sind Vorrichtungen einsetzbar, bei denen das piezoelektrische Element 2 auf einer parallel zu der das Gehäuse abschließenden Membran angeordneten zweiten Membran angeordnet ist. Eine Übertragung der Schwingung der zweiten Membran auf die das Gehäuse abschließende Membran erfolgt dabei z.B. indem die zweite Membran an deren äußeren Rand gehaltert oder eingespannt ist und von deren Mitte eine mechanische Verbindung zu der Mitte der anderen Membran besteht. Diese Verbindung ist z.B. eine beide Membranen verbindende Spannschraube oder ein an der inneren Membran angeformter Stempel.

Besteht das Gehäuse 11 aus Metall so kann das piezoelektrische Element 2 direkt auf der Membran 12 angebracht, z.B. angeklebt werden. Das vorzugsweise geerdete Gehäuse dient dann als Referenzelektrode.

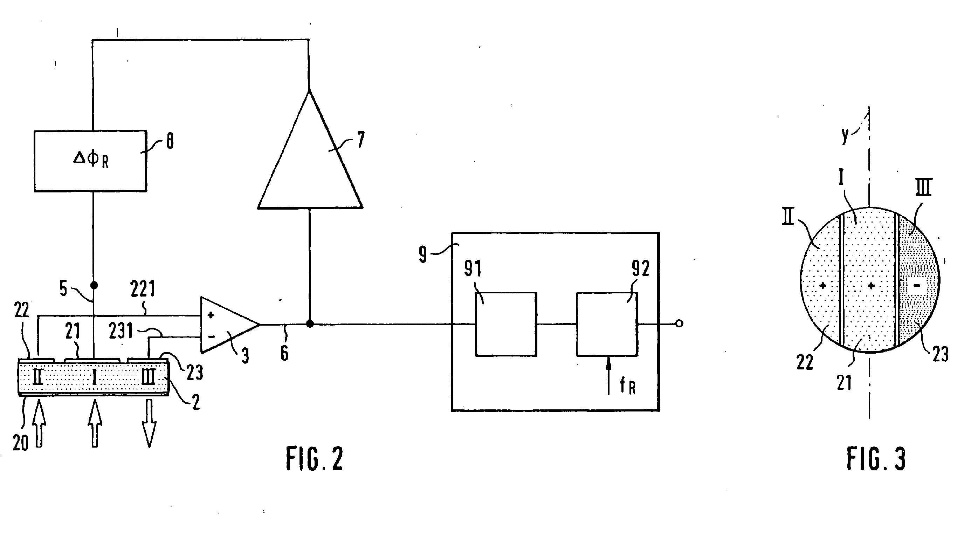

Besteht das Gehäuse 11 dagegen aus einem Isolator, so ist zwischen Membran 12 und piezoelektrischem Element 2 eine Referenzelektrode 20 anzuordnen, die mit einem Bezugspotential, vorzugsweise dem Erdpotential zu verbinden ist. Fig. 2 zeigt eine schematische Darstellung des piezoelektrischen Elements 2.

Auf einer membran-abgewandten Kreisfläche des piezoelektrischen Elements 2 ist eine Sendeelektrode 21 angeordnet, die mit einer Sendesignalleitung 5 verbunden ist. Fig. 3 zeigt die Anordnung der Sendeelektrode 21 und der Empfangselektroden 22,23. Ein an dieser Sendesignalleitung 211 anliegendes Sendesignal, z.B. eine Wechselspannung, versetzt das fest mit der Membran 12 verbundene piezoelektrischen Element 2 und die Membran 12 in Biegeschwingungen. Hierdurch werden die endseitig an die Membran 12 angeformten Schwingstäbe 14 in Schwingungen senkrecht zu deren Längsachse versetzt.

Umgekehrt bewirkt eine Schwingung der Schwingstäbe eine Biegeschwingung des aus der Membran 12 und dem piezoelektrischen Element 2 bestehenden Verbundelements.

Auf der membran-abgewandten Kreisfläche des piezoelektrischen Elements 2 sind eine erste und eine zweite Empfangselektrode 22, 23 angeordnet und jeweils mit einer Signalleitung 221, 231 verbunden über die Signale $E_1$ und $E_2$ der beiden Empfangselektroden 22, 23 zur Verfügung stehen.

Die Amplituden $A_1$, $A_2$ dieser elektrischen Signale $E_1$, $E_2$ sind um so größer, je größer die mechanische Schwingungsamplitude der Schwingstäbe 14 ist. In Ausnutzung dieser Tatsache wird die Vorrichtung vorzugsweise bei deren Resonanzfrequenz $f_r$ betrieben. Bei der Resonanzfrequenz $f_r$ ist die mechanische Schwingungsamplitude maximal.

Betrachtet man einen harmonischen Oszillator als Beispiel für ein ideales Schwingungssystem, so weist dessen Schwingungsamplitude ein einziges Maximum in Abhängigkeit von der Schwingungsfrequenz auf. Die Phasendifferenz zwischen der Schwingungsanregung und der Schwingung des Oszillator erfährt im Bereich dieses Maximums einen Phasensprung von 180°. Bei der Resonanzfrequenz ist die Schwingungsamplitude maximal und die Phasendifferenz beträgt 90°.

Basierend auf dem gleichen physikalischen Grundprinzip besteht auch bei der vorliegenden Vorrichtung im Resonanzfall eine feste Phasenbeziehung zwischen dem Sendesignal und dem Empfangssignal E. Der feste Wert der Phasendifferenz ist abhängig von den mechanischen und elektrischen Schwingungseigenschaften der Vorrichtung. Messungen haben gezeigt, daß die Werte in der Regel zwischen 60° und 90° liegen.

Bei handelsüblichen Vorrichtungen dieser Art ist nur eine Empfangselektrode vorgesehen, die ein Elektrodensignal liefert.

Damit eine solche Vorrichtung in Schwingungen bei deren Resonanzfrequenz $f_r$ versetzt wird, ist üblicherweise ein Regelkreis vorgesehen, der die zwischen dem elektrischen Sendesignal und einem Elektrodensignal bestehende Phasendifferenz auf einen bestimmten konstanten Wert $\Delta\phi_R$ regelt.

Bei einem harmonischen Oszillator bewirkt eine Dämpfung oder eine Reduktion der Schwingungsgüte eine Reduktion der maximalen Amplitude im Resonanzfall. Die Phase steigt in einem solchen Fall in Abhängigkeit von der Frequenz nicht sprunghaft sondern kontinuierlich an und zwar um so langsamer, je größer die Dämpfung bzw. die Reduktion der Schwingungsgüte ist. Insgesamt erfolgt jedoch auch bei sehr großer Dämpfung eine Phasenänderung von insgesamt 180° und bei der Resonanzfrequenz besteht eine Phasendifferenz von 90°. Der feste der Resonanz entsprechende Wert der Phasendifferenz von 90° existiert immer und wird bei der Resonanzfrequenz angenommen.

Im Unterschied zu einem idealen Oszillator bestehen bei der oben genannten Vorrichtung Kopplungen elektrischer und mechanischer Art zwischen dem piezoelektrischen Element 2, der Sendeelektrode 21 und den Empfangselektroden 22, 23 und dem mechanischen Schwingungsgebilde.

Mechanische Kopplungen, wie sie z. B. durch Verspannungen des piezoelektrischen Elements 2 auftreten könnten, sind bei der beschriebenen Vorrichtung vernachlässigbar gering und werden daher nachfolgend nicht berücksichtigt.

Elektrische Kopplungen bestehen zwischen der Sendeelektrode 21 und der Referenzelektrode 20, zwischen jeder der Empfangselektroden 22, 23 und der Referenzelektrode und zwischen jeder Empfangselektrode 22,23 und der Sendeelektrode 21. Sie können in Form eines Ersatzschaltbildes durch die jeweiligen Elektroden verbindende Kapazitäten dargestellt werden.

Diese kapazitive Kopplung bewirkt, daß an den Empfangselektroden 22, 23 auch dann ein von null verschiedenes Signal anliegt, wenn die Schwingstäbe 14 fest eingespannt sind und die Membran 12 keine mechanische Bewegung ausführt.

Die Form der an den Empfangselektroden 22, 23 anliegenden Signale $E_1$ und $E_2$ wird nachfolgend am Beispiel des Signals $E_1$ der Empfangselektrode 22 erläutert

Das Signal $E_1$ setzt sich aus zwei Komponenten zusammen, nämlich einem Meßsignal $E_{M1}$ und einem durch die elektrische Kopplung bedingten zusätzlichen Signal $E_{el1}$.

$$E_1 = E_{M1} + E_{el1}$$

Das Meßsignal $E_{M1}$ beruht auf der Schwingung des mechanischen Schwingungsgebildes und weist eine frequenzabhängige Amplitude $A_{M1}(f)$ und eine frequenzabhängige Phase $\Delta\phi_{M1}(f)$ auf. Mit Phase ist hier jeweils der Phasenversatz bezeichnet, den die jeweilige Komponente des elektrischen Signals $E_1$ bezogen auf das elektrische Sendesignal aufweist.

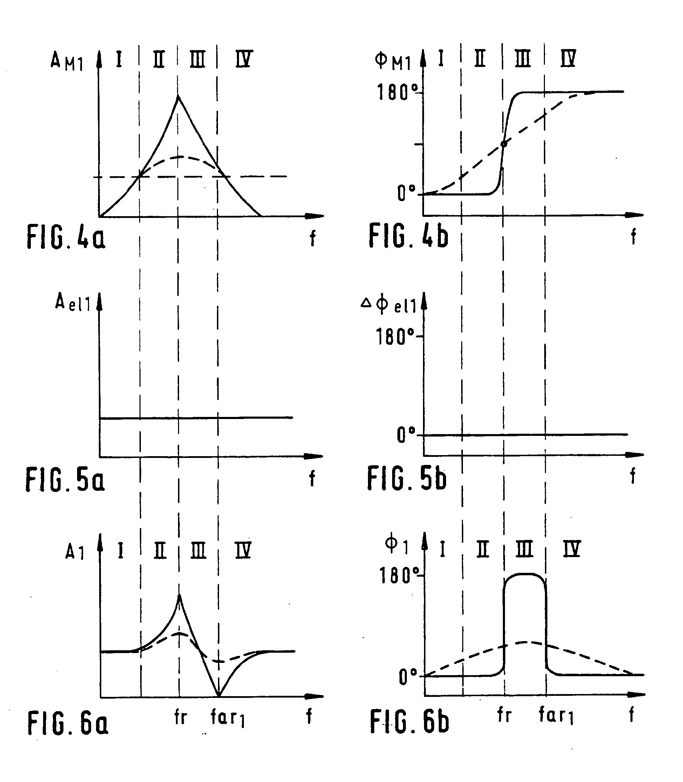

Fig. 4a zeigt die Amplitude $A_{M1}(f)$ und Fig. 4b die Phase $\Delta\phi_{M1}(f)$ des Meßsignals $E_{M1}$ in Abhängigkeit von der Frequenz f. Die Kurven können rechnerisch durch Simulationsrechnungen, z.B. durch Finite-Elemente-Rechnungen bestimmt werden.

Experimentell können sie ausgemessen werden, indem die Sendesignalleitung 5 an einen Frequenzgenerator angeschlossen wird und Phase und Amplitude der Schwingung der Schwingstäbe 14 in Abhängigkeit von der Frequenz des Frequenzgenerators, z. B. mit einem Laservibrometer, bestimmt werden.

In beiden Figuren 4a, 4b entspricht jeweils die durchgezogene Linie einer Vorrichtung mit hoher Schwingungsgüte und die gestrichelte Linie einer Vorrichtung mit niedriger Schwingungsgüte. Sowohl die Amplitude $A_{M1}(f)$ als auch die Phase $\Delta\phi_{M1}(f)$ des Meßsignals weist in beiden Fällen den für einen harmonischen Oszillator typischen vorgehend bereits beschriebenen Verlauf auf.

Das zusätzlichen Signal $E_{el1}$ weist eine im wesentlichen konstante Amplitude $A_{el1}$ und eine im wesentlichen konstante Phase $\Delta\phi_{el1}$ auf. Mit Phase ist auch hier die Phasenversatz der jeweiligen Komponente des elektrischen Signals $E_1$ bezogen auf das elektrische Sendesignal bezeichnet.

Die durchgezogene Linie in Fig. 5a zeigt die Amplitude $A_{el1}$ und die durchgezogene Linie in Fig. 5b die Phase $\Delta\phi_{el1}$ des zusätzlichen Signals $E_{el1}$ in Abhängigkeit von der Frequenz f. Auch diese Kurven können durch Simulationsrechnungen ermittelt werden. Experimentell können sie z.B. aufgenommen werden, indem ein nicht-polarisiertes piezoelektrisches Element eingesetzt wird. Bei diesem wird durch ein Sendesignal keinerlei mechanische Bewegung erzeugt und das Signal $E_1$ entspricht folglich dem auf elektrischer Kopplung beruhenden zusätzlichen Signal $E_{el1}$. Dieses kann mittels eines Oszilloskops ausgemessen werden.

Die Amplitude $A_{el1}$ und die Phasen $\Delta\phi_{el1}$ des zusätzlichen Signals $E_{el1}$ steht in eindeutigem Zusammenhang zu dem mechanischen Aufbau der jeweiligen Vorrichtung und deren elektrischen Eigenschaften. In dem gezeigten Ausführungsbeispiel weist das zusätzliche Signal $E_{el1}$ eine Phase von 0° auf.

Fig. 6a zeigt die Amplitude $A_1(f)$ und Fig. 6b die Phase $\Delta\phi_1(f)$ des Signals $E_1$. Die beiden Kurven ergeben sich aus der phasen- und amplitudengetreuen Überlagerung der beiden zuvor beschriebenen Komponenten des Signals $E_1$.

$$E_1 e^{i\Delta\phi} = A_{M1} e^{i\Delta\phi_{M1}} + A_{el1} e^{i\Delta\phi_{el1}}$$

Beide Kurven weisen jeweils vier Bereiche I, II, III, IV auf, die nachfolgend stark vereinfacht beschrieben sind.

In den äußeren Bereichen I und IV weist das zusätzliche Signal $E_{el1}$ die größere Amplitude $A_{el1}$ auf und ist somit dominant. Die resultierende Phase $\Delta\phi_1$ entspricht somit im wesentlichen der Phase des zusätzlichen Signals $\Delta\phi_{el1}$.

In den Bereichen I und II sind die beiden Signale gleichphasig und addieren sich. Die Amplitude $E_1$ steigt in diesen Bereichen kontinuierlich an und weist bei der Resonanzfrequenz $f_r$ ein Maximum auf. In den Bereichen III und IV sind die Signale gegenphasig. Im Bereich III fällt die Amplitude $A_1$ ab. An der oberen Bereichsgrenze beträgt sie null. Bei dieser nachfolgend als Antiresonanzfrequenz $f_{ar1}$ bezeichneten Frequenz weisen das Meßsignal $E_{M1}$ und das zusätzliche Signal $E_{el1}$ die gleiche Amplitude und entgegengesetzte Phasen auf. Im Bereich IV steigt die Amplitude $A_1$

erneut an.

Die Phase $\Delta\phi_1$ beträgt in den Bereichen I, II und IV 0° und im Bereich III 180°.

Ohne genaue Kenntnis des zusätzlichen Signals $E_{el1}$ ist das Meßsignal $E_{M1}$ nicht aus dem Signal $E_1$ der Empfangselektrode bestimmbar.

Tritt nun der Fall ein, daß das mechanische Schwingungsgebilde gedämpft ist oder eine reduzierte Schwingungsgüte aufweist, so zeigen Amplitude $A_{M1}(f)$ und Phase $\Delta\phi_{M1}(f)$ des Meßsignals den in den Figuren 4a und 4b gestrichelt dargestellten Verlauf. Die Amplitude $A_{M1}(f)$ steigt und sinkt erheblich langsamer mit der Frequenz und weist einen deutlich geringeren Maximalwert auf. Die Phase $\Delta\phi_{M1}(f)$ zeigt keinen Phasensprung, sondern steigt kontinuierlich mit der Frequenz. Je größer die Reduktion der Schwingungsgüte des Systems ist, um so geringer ist der Maximalwert der Amplitude und um so geringer ist die Steigung der Phase. Die Phase $\Delta\phi_{M1}(f)$ erreicht asymptotisch jedoch immer die Werte 0° und 180° und bei der Resonanzfrequenz beträgt sie nach wie vor 90°. Das zusätzliche Signal $E_{el1}$ bleibt unverändert.

Amplitude $A_1(f)$ und Phase $\Delta\phi_1(f)$ des sich aus der amplituden- und phasengetreuen Überlagerung der beiden Komponenten ergebenden Empfangssignal $E_1$ unterscheiden sich deutlich von dem erstgenannten Fall, bei dem keine Reduktion der Schwingungsgüte vorlag. Die Maxima der Amplitude $A(f)$ sind sehr viel weniger ausgeprägt und die Phase $\Delta\phi_1(f)$ weist anstelle der beiden einander entgegengesetzten Phasensprünge von jeweils 180° zwei einander entgegengerichtete kontinuierliche Phasenänderungen auf. Der maximale Phasenunterschied ist deutlich geringer als 180°. Abhängig von der Schwingungsgüte des Systems ist er sogar geringer als 90°.

Tritt also eine Dämpfung des mechanischen Schwingungsgebildes, z.B. in Schaum oder in einem viskosen Medium, oder eine anders geartete Reduktion der Schwingungsgüte des Systems auf, so weist die Phasendifferenz $\Delta\phi_1$ zwischen dem elektrischen Sendesignal und dem elektrischen Signal $E_1$ in Abhängigkeit von der Frequenz zwar noch zwei einander entgegengerichtete kontinuierliche Phasenänderungen auf, der maximale Phasenunterschied kann jedoch sehr gering sein. Die maximale Phasendifferenz ist um so geringer, je geringer der Abstand zwischen der Resonanzfrequenz $f_r$ und der Antiresonanzfrequenz $f_{ar1}$ ist.

Bei Vorrichtungen, wie sie aus dem Stand der Technik entnehmbar sind, wird das mechanische Schwingungssystem zu Schwingungen mit der Resonanzfrequenz $f_r$ erregt, indem durch einen Regelkreis eine feste, der Resonanz entsprechende Phasenbeziehung zwischen dem Sendesignal und dem Signal einer Empfangselektrode hergestellt. Damit eine solche Vorrichtung im unbedeckten Zustand bei hoher Schwingungsgüte funktionstüchtig ist, beträgt die feste Phasendifferenz $\Delta\phi_R$ bei dem hier gezeigten Fall des Signals $E_1$ 90°.

Tritt nun aufgrund der Eigenschaften des Füllgutes oder aufgrund einer Reduktion der Schwingungsgüte der Vorrichtung der vorbeschriebene Fall ein, daß die Phase $\Delta\phi_1(f)$ des Signal diesen festen Wert $\Delta\phi_R$ über den gesamten Frequenzbereich nicht mehr annimmt, so ist eine zuverlässige Anregung des mechanischen Schwingungssystems nicht mehr möglich. Die Vorrichtung ist folglich nicht funktionsfähig.

Dieses Problem wird durch die vorliegende Erfindung gelöst.

Erfindungsgemäß weist das piezoelektrische Element 2 mindestens drei Bereiche I, II, II auf: einen ersten Bereich I auf dem die Sendeelektrode 21 angeordnet ist und einen zweiten und einen dritten Bereich II, III, auf denen jeweils eine der Empfangselektroden 22 und 23 angeordnet ist. Die beiden Empfangselektroden 22, 23 sind formgleich und symmetrische zueinander angeordnet. Auch sind sie symmetrisch zur Sendeelektrode 21 angeordnet. In dem in Fig. 3 gezeigten Ausführungsbeispiel sind die Empfangselektroden 22, 23 Kreissegmente, die auf einander diametral gegenüberliegenden Kreissegmenten der membran-abgewandten Kreisfläche des piezoelektrischen Elements 2 angeordnet sind. Zwischen den beiden Empfangselektroden 22, 23 ist die Sendeelektrode 21 angeordnet.

Andere Geometrien sind gleichermaßen einsetzbar, sofern die Empfangselektrode formgleich und symmetrisch zueinander und zur Sendeelektrode angeordnet sind. Die Anordnung ist symmetrisch zu einer in Fig. 3 eingezeichneten Längsachse y der Kreisfläche.

Die Bereiche I und II weisen eine Polarisation auf, die parallel zur Symmetrieachse des piezoelektrischen Elements 2, also senkrecht zu der Kreisfläche desselben, verläuft. Der Bereich III weist eine Polarisation auf, die der der Bereiche I und III entgegengerichtet ist. Die Polarisationsrichtungen sind in Fig. 2 durch Pfeile und in Fig. 3 durch die Zeichen + und - angeben. Wie bereits eingangs erläutert, setzt sich das Signal $E_1$ zusammen aus dem Meßsignal $E_{M1}$ und dem zusätzlichen Signal $E_{el1}$. Analog setzt sich das Signal $E_2$ der Empfangselektrode 23 zusammen aus einem Meßsignal $E_{M2}$ und einem zusätzlichen Signal $E_{el2}$.

$$E_2 \; = \; E_{M2} \, + \; E_{el2}$$

Aufgrund der Symmetrie der Anordnung weist das Meßsignal $E_{M2}$ bei einer Biegeschwingung des Verbundelements aus Membran 12 und piezoelektrischem Element 2 eine Amplitude $A_{M2}$ auf die gleich der Amplitude $A_{M1}$ des Signals $E_1$ ist. Aufgrund der entgegengerichteten Polarisationen der Bereiche I und III des piezoelektrischen Elements 2 sind die beiden Meßsignale $E_{M1}$ und $E_{M2}$ jedoch gegenphasig.

$$E_{M1} = A_{M1}e^{i\,\Delta\phi M1}$$

$$E_{M2} = A_{M2}\,e^{i\,\Delta\phi M2} = -\,A_{M1}e^{i\,\Delta\phi M1} = -\,E_{M1}$$

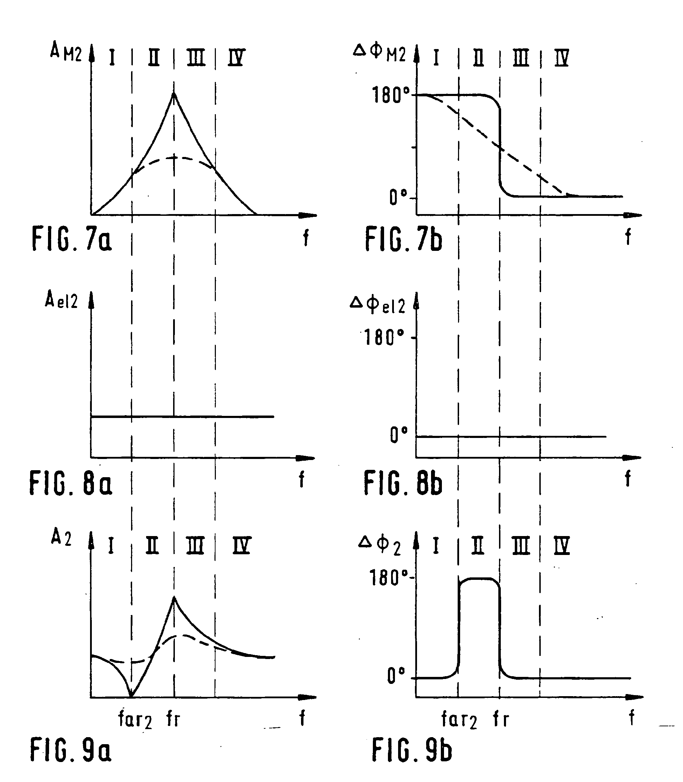

In Fig. 7a ist die Amplitude $A_{M2}$ und in Fig. 7b die Phase $\Delta\phi_{M2}$ des Meßsignals $E_{M2}$ dargestellt.

Das zusätzliche durch die kapazitive Kopplung bedingte Signal $E_{el2}$ der Elektrode 23 weist eine Amplitude $A_{el2}$ und eine Phase $\Delta\phi_{el2}$ auf, die gleich der Amplitude $A_{el1}$ bzw. der Phase $\Delta\phi_{el1}$ des zusätzlichen Signals $E_{el1}$ sind.

Es gilt also

$$E_{el1} = A_{el1}e^{i\,\Delta\phi el1} = A_{el2}e^{i\,\Delta\phi el2} = E_{el2}$$

Amplitude $A_{el2}$ und Phase $\Delta\phi_{el2}$ des zusätzlichen Signals $E_{el2}$ sind in Fig. 8a und 8b dagestellt. Die Polarisationsrichtung der Bereiche I, II und II hat keinen Einfluß auf die zwischen den Elektroden bestehende kapazitive Kopplung.

Das an der Empfangselektrode 23 anliegenden Signal $E_2$ ist gleich der amplituden und phasengetreuen Summe des Meßsignals $E_{M2}$ und des zusätzlichen Signals $E_{el2}$. Phase $\Delta\phi_2$ und Amplitude $A_2$ dieses Signals $E_2$ sind in den Figuren 9a und 9b dargestellt.

Wie in Fig. 2 gezeigt, ist ein Differenzverstärker 3 vorgesehen. Das Signal $E_1$ liegt über die Signalleitung 221 an einem nicht-invertierenden, das Signal $E_2$ über die Signalleitung 222 an einem invertierenden Eingang des Differenzverstärkers 3 an. An einem Ausgang des Differenzverstärkers 3 steht ein Empfangssignal E über eine Empfangssignalleitung 6 zur Verfügung. Das Empfangssignal E ist gleich der phasen- und amplitudengetreuen Differenz der Signale $E_1$ und $E_2$

$$
\begin{aligned}
E \quad &= E_1 - E_2 \\
&= E_{M1} + E_{el1} - E_{M2} - E_{el2} \\
&= E_{M1} + E_{el1} - (-E_{M1}) - E_{el1} \\
&= 2\,E_{M1}
\end{aligned}
$$

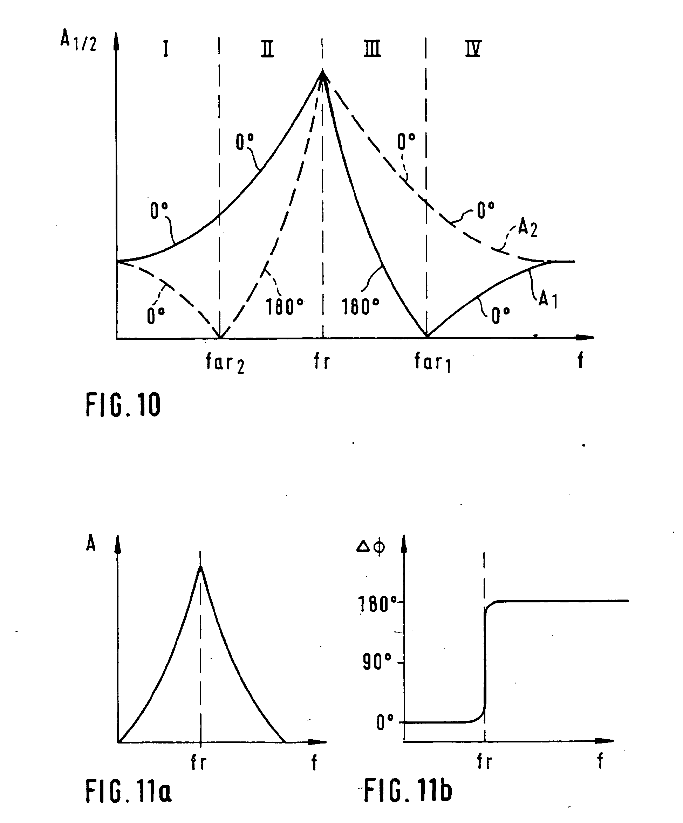

Zum besseren Verständnis sind in Fig. 10 die Amplituden $A_1$ als durchgezogenen Linie und $A_2$ als gestrichelte Linie eingezeichnet. Fig. 11a zeigt die Amplitude A und Fig. 11b die Phase $\Delta\phi$ des resultierenden Empfangssignals E. Die Werte der Phasen $\Delta\phi_1$ und $\Delta\phi_2$ der Signale $E_1$ und $E_2$ sind in Fig. 10 als Zahlenwert an den Linien angegeben.

In den Bereichen I und II weist das Signal $E_1$ die größere Amplitude $A_1$ auf und ist daher dominant. In den Bereichen III und IV weist das Signal $E_2$ die größere Amplitude $A_2$ auf und ist entsprechend dort dominant.

Die Amplitude A des Empfangssignals E weist ein einziges Maximum bei der Resonanzfrequenz $f_r$ des Systems auf und die Phase $\Delta\phi$ erfährt genau bei dieser Resonanzfrequenz $f_r$ einen Phasensprung um 180°. Dieser Verlauf entspricht dem eines idealen harmonischen Oszillators.

Reduziert sich Schwingungsgüte des Systems, so verändert sich die Amplitude A dahingehend, daß das Maximum weniger ausgeprägt ist. Es erfolgt anstelle des Phasensprungs ein kontinuierlicher Anstieg der Phase. Die Steigung ist um so geringer, je größer die Reduktion der Schwingungsgüte ist. Bei der Resonanzfrequenz $f_r$ liegt jedoch unabhängig von der Schwingungsgüte immer eine Phase von 90° vor.

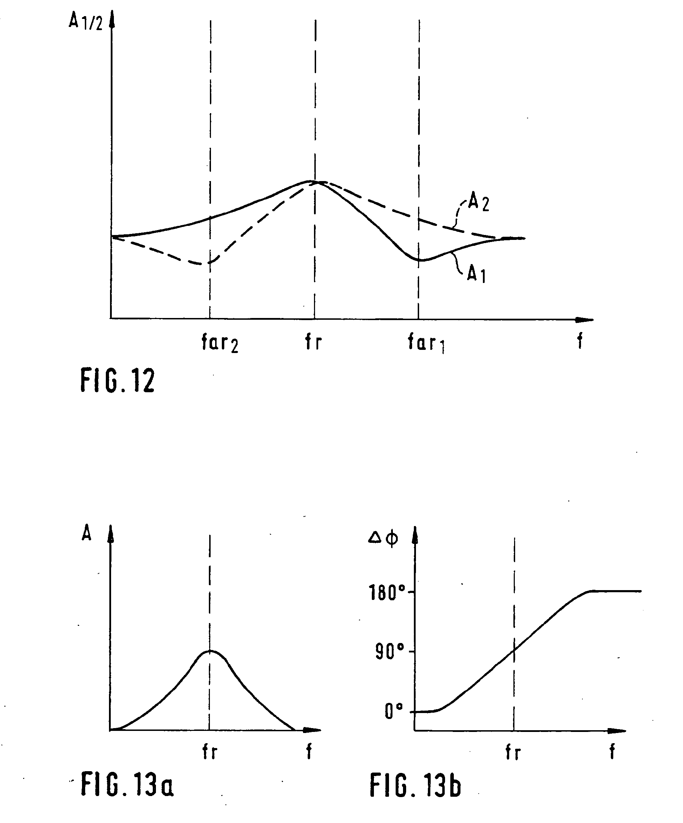

In Fig. 12 sind die Amplituden $A_1$ als durchgezogenen Linie und $A_2$ als gestrichelte Linie von einer Vorrichtung mit geringer Schwingungsgüte eingezeichnet. Fig. 13a zeigt die Amplitude A und Fig. 13b die Phase $\Delta\phi$ des resultierenden Signals E der Vorrichtung mit niedriger Schwingungsgüte.

Aufgrund der erläuterten Beziehungen zwischen den einzelnen Signalen ist das Empfangssignal E gleich dem zweifachen Meßsignal $E_{M1}$ der ersten Empfangselektrode 22. Es steht hiermit ein Empfangssignal E zur Verfügung, das völlig unverfälscht dem gewünschten Meßsignal entspricht und in dem keinerlei zusätzliche Signale enthalten sind.

Amplitude A und Phase $\Delta\phi$ des Empfangssignals E weisen in Abhängigkeit von der Frequenz genau wie das Meßsignal $E_{M1}$ den für einen harmonischen Oszillator typischen Verlauf auf.

Damit liegt bei der Resonanzfrequenz $f_r$ des mechanischen Schwingungsgebildes immer der gleiche feste Wert der Phasendifferenz $\Delta\varphi_R$ vor, unabhängig von der Schwingungsgüte des Systems. Das Empfangssignal E ist damit hervorragend geeignet für den Betrieb eines Regelkreises, der dazu dient, die feste Phasenbeziehung $\Delta\phi_R$ zwischen dem Sendesignal und dem Empfangssignal E einzustellen.

Ein Ausführungsbeispiel eines derartigen Regelkreises ist in Fig. 2 dargestellt. Dort ist das Empfangssignal E über die Empfangssignalleitung 6, über einen Verstärker 7 und einen Phasenschieber 8, der dessen Phase um den bestimmten konstanten Wert $\Delta\phi_R$ verschiebt, auf das Sendesignal zurückgekoppelt. Der Verstärker 7 ist so zu dimensionieren, daß die Selbsterregungsbedingung erfüllt ist. Das mechanische Schwingungsgebilde wird folglich über das piezoelektrische Element 2 zu Schwingungen mit dessen Resonanzfrequenz angeregt.

Ist das Schwingungsgebilde von dem Füllgut bedeckt, so hat die Resonanzfrequenz $f_r$ einen geringeren Wert, als wenn das Schwingungsgebilde frei schwingt. Der fest Wert der Phasendifferenz ist unabhängig davon, ob das Schwingungsgebilde von dem Füllgut bedeckt ist oder nicht.

Das Empfangssignal E liegt weiterhin über die Empfangssignalleitung 6 am Eingang einer Auswerteeinheit 9 an. Mittels einer Frequenzmeßschaltung 91 wird dessen Frequenz bestimmt und das Ergebnis einem Komparator 92 zugeführt. Dieser vergleicht die gemessene Frequenz mit einer in einem Speicher abgelegten Referenzfrequenz $f_R$. Ist die gemessene Frequenz kleiner als die Referenzfrequenz $f_R$ gibt die Auswerteeinheit 9 ein Ausgangssignal ab, das angibt, daß das mechanische Schwingungsgebilde von einem Füllgut bedeckt ist. Weist die Frequenz einen Wert auf der größer als die Referenzfrequenz $f_R$ ist, so gibt die Auswerteeinheit 9 ein Ausgangssignal ab, das angibt, daß das mechanische Schwingungsgebilde nicht vom Füllgut bedeckt ist.

**Patentansprüche**

1. Vorrichtung zur Feststellung und/oder Überwachung eines vorbestimmten Füllstandes in einem Behälter, welche Vorrichtung umfaßt:

   - ein auf der Höhe des vorbestimmten Füllstandes angebrachtes mechanisches Schwingungsgebilde (1),
   - ein piezolelektrisches Element (2),

      - - das das Schwingungsgebilde (1) zu Schwingungen anregt und dessen Schwingungen aufnimmt,
      - - das mindestens drei Bereiche aufweist,

         - - - einen ersten eine Sendeelektrode (21) aufweisenden Bereich (I), einen zweiten eine erste Empfangselektrode (22) aufweisenden Bereich (II) und einen dritten eine zweite Empfangselektrode (23) aufweisenden Bereich (III),

   - wobei die beiden Empfangselektroden (22, 23) formgleich sind und symmetrisch zueinander und zu der Sendeelektrode (21) angeordnet sind und
   - wobei das piezoelektrische Element (2) im ersten und im zweiten Bereich (I, II) eine Polarisation aufweist, die einer Polarisation des dritten Bereichs (III) entgegengerichtet ist, und -
   - die ein Empfangssignal (E) erzeugt, das gleich der Differenz eines an der ersten Empfangselektrode (22) anstehenden ersten Signals ($E_1$) und eines an der zweiten Empfangselektrode (23) anstehenden zweiten Signals ($E_2$) ist, und
   - eine Auswerteeinheit (9),

      - - die die Frequenz des Empfangssignals (E) bestimmt und mit einer Referenzfrequenz ($f_R$) vergleicht.

2. Vorrichtung nach Anspruch 1, die eine Schaltung aufweist, die die Frequenz des Empfangssignal (E) bestimmt, diese mit einer Referenzfrequenz ($f_R$) vergleicht und ein Ausgangssignal erzeugt das angibt, daß das mechanische Schwingungsgebilde (1) von einem Füllgut bedeckt ist, wenn die Frequenz einen Wert aufweist der kleiner als die Referenzfrequenz ($f_R$) ist, und daß es nicht bedeckt ist, wenn der Wert größer ist.

3. Vorrichtung nach Anspruch 1, bei der ein Sendesignal über eine Sendesignalleitung (5) an der Sendeelektrode (21) anliegt und bei der ein Regelkreis vorgesehen ist, der eine zwischen dem Sendesignal und dem Empfangssignal (E) bestehende Phasendifferenz auf einen bestimmten konstanten Wert ($\Delta\phi_R$) regelt, bei dem das Schwingungsgebilde (1) Schwingungen mit einer Resonanzfrequenz ($f_r$) ausführt.

**4.** Vorrichtung nach Anspruch 1, bei der auf dem piezoelektrischen Element (2) eine mit einem Bezugspotential verbundene Referenzelektrode (20) angeordnet ist.

**5.** Vorrichtung nach Anspruch 1, bei der das piezoelektrische Element (2) scheibenförmig ist und die Sendelektrode (21) und die beiden Empfangselektroden (22, 23) auf einer Kreisfläche desselben angeordnet sind.

**6.** Vorrichtung nach Anspruch 5, bei der die beiden Empfangselektroden (22, 23) Kreissegmente sind und auf einander diametral gegenüberliegenden Kreissegmenten der Kreisfläche angeordnet sind.

**Claims**

**1.** A device for determining and/or monitoring a predetermined filling level in a container, which device comprises:

- a mechanical oscillatory structure (1) mounted at the height of the predetermined filling level,
- a piezoelectric element (2),

- - which excites the oscillatory structure (1) into oscillations and picks up the oscillations thereof,
- - which has at least three zones,

- - - a first zone (I) having a transmitting electrode (21), a second zone (II) having a first receiving electrode (22), and a third zone (III) having a second receiving electrode (23),

- the two receiving electrodes (22, 23) having a similar shape and being disposed symmetrically to one another and to the transmitting electrode (21), and
- the piezoelectric element (2) having a polarisation in the first and in the second zone (I, II) which is opposed to a polarisation of the third zone (III), and
- which generates a received signal (E) which is equal to the difference of a first signal ($E_1$) applied to the first receiving electrode (22) and a second signal ($E_2$) applied to the second receiving electrode (23), and
- an evaluating unit (9),

- - which determines the frequency of the received signal (E) and compares it with a reference frequency ($f_R$).

**2.** A device according to Claim 1, which has a circuit that determines the frequency of the received signal (E), compares the said frequency with a reference frequency ($f_R$), and generates an output signal which indicates that the mechanical oscillatory structure (1) is covered by a filling material if the frequency has a value that is smaller than the reference frequency ($f_R$), and that it is not covered if the value is greater.

**3.** A device according to Claim 1, in which a transmitted signal is applied to the transmitting electrode (21) via a transmitted signal line (5) and in which a closed loop control circuit is provided which adjusts a phase difference, existing between the transmitted signal and the received signal (E), to a certain constant value ($\Delta\Phi_R$) at which the oscillatory structure (1) performs oscillations with a resonance frequency ($f_r$).

**4.** A device according to Claim 1, in which a reference electrode (20) connected to a reference potential is disposed on the piezoelectric element (2).

**5.** A device according to Claim 1, in which the piezoelectric element (2) is disc-shaped and the transmitting electrode (21) and the two receiving electrodes (22, 23) are disposed on a circular surface of the said element.

**6.** A device according to Claim 5, in which the two receiving electrodes (22, 23) are circular segments and are disposed on mutually diametrically opposite circular segments of the circular surface.

**Revendications**

**1.** Dispositif destiné à la détermination et/ou la surveillance d'un niveau prédéfini dans un récipient, lequel dispositif comprend :

- un vibrateur (1) mécanique installé à hauteur du niveau prédéfini,
- un élément piézolélectrique (2),

- - qui excite le vibrateur (1) en vibrations et absorbe ses vibrations,
- - qui présente au moins trois zones,

- - - une première zone (I) comportant une électrode d'émission, une deuxième zone (II) comportant une première électrode de réception (22) et une troisième zone (III) comportant une deuxième électrode d'émission (23),

- les deux électrodes de réception (22, 23) étant de forme identique et disposées de façon symétrique et par rapport à l'électrode d'émission (21) et
- l'élément piézolélectrique (2) présentant dans la première et dans la deuxième zone (I, II) une polarisation, qui est inverse à une polarisation de la troisième zone (III), et
- qui génère un signal de réception (E), qui équivaut à la différence d'un premier signal ($E_1$) présent sur la première électrode de réception (22) et à la différence d'un deuxième signal ($E_2$) présent sur la deuxième électrode de réception (23), et
- une unité d'exploitation (9),

- - qui détermine la fréquence du signal de réception (E) et la compare à une fréquence de référence ($f_R$).

2. Dispositif selon la revendication 1, qui comporte un circuit, qui détermine la fréquence du signal de réception (E), la compare à une fréquence de référence ($f_R$) et génère un signal de sortie indiquant que le vibrateur mécanique (1) est recouvert par un produit lorsque la fréquence a une valeur inférieure à la fréquence de référence ($f_R$), et qu'il n'est pas recouvert lorsque la valeur est supérieure.

3. Dispositif selon la revendication 1, pour lequel est appliqué un signal d'émission par l'intermédiaire d'un câble de signal d'émission (5) sur l'électrode d'émission (21) et pour lequel est prévu un circuit de régulation, qui régule le déphasage existant entre le signal d'émission et le signal de réception (E) à une valeur constante déterminée ($\square\square_R$), à laquelle le vibrateur (1) génère des vibrations à une fréquence de résonance ($f_r$).

4. Dispositif selon la revendication 1, pour lequel est disposé, sur l'élément piézolélectrique (2), une électrode de référence (20) associée à un potentiel de référence.

5. Dispositif selon la revendication 1, pour lequel l'élément piézolélectrique (2) est en forme de disque et l'électrode d'émission (21) et les deux électrodes de réception (22, 23) sont disposées sur une surface circulaire du même élément.

6. Dispositif selon la revendication 5, pour lequel les deux électrodes de réception (22, 23) sont des segments de cercle et sont disposés sur des segments de cercle diamétralement opposés de la surface circulaire.

FIG. 1

FIG. 3

FIG. 2

$A_{M1}$  I | II | III | IV

FIG.4a                              f

$\Phi_{M1}$  I | II | III | IV

180°

0°

FIG.4b                              f

$A_{el1}$

FIG.5a                              f

$\Delta\Phi_{el1}$

180°

0°

FIG.5b                              f

$A_1$  I | II | III | IV

fr  far$_1$

FIG.6a                              f

$\Phi_1$  I | II | III | IV

180°

0°

fr  far$_1$

FIG.6b                              f

FIG. 7a

FIG. 7b

FIG. 8a

FIG. 8b

FIG. 9a

FIG. 9b

FIG.10

FIG.11a

FIG.11b

$A_{1/2}$

far$_2$     fr     far$_1$     f

A$_2$

A$_1$

FIG. 12

A

fr     f

FIG. 13a

$\Delta\phi$

180°

90°

0°

fr     f

FIG. 13b